# EUROPEAN PATENT APPLICATION

(11) **EP 2 903 320 A1**
(43) Date of publication of application: **05.08.2015**
(21) Application number: 14153726.6
(22) Date of filing: 03.02.2014
(51) Int. Cl.: H04W 12/04, H04W 12/06, H04W 84/12

(54) **System to connect wireless lan devices for internet sharing**

(71) Applicant: UNIVERSITE DE GENEVE, 1211 Geneva 4 (CH)
(72) Inventor: Seigneur, Jean-Marc, 74240 Gaillard (FR); Ballester Lafuente, Carlos, 1205 Geneve (CH)
(74) Representative: reuteler & cie SA

(57) **Abstract**

A system to share an Internet connection of a second device with a first device by means of a wireless network connection between the first device and second device. The first device comprises a connection program, the connection program comprises first device information comprising identification information to identify the first device and an asymmetric cryptographic algorithm comprising an encryption algorithm and a decryption algorithm. The connection program is configured to transmit the first device information to the second device. The second device comprises a connection program configured to verify the identity of the first device by means of the received first device information and being configured to encrypt a connection access code using the received encryption algorithm. The connection program of the second device being further configured to subsequently transmit connection information comprising the encrypted connection access code to the first device. The connection program of the first device is configured to decrypt the received connection access code using the decryption algorithm, and to connect the first device to the second device using the decrypted connection access code. The connection program of the second device is configured to allow Internet access to the connection that uses the decrypted connection access code. The system being operable to generate and store on a memory unit usage information, wherein the usage information comprises the usage of the Internet by the first device over the connection that uses the decrypted connection access code.

## Description

### TECHNICAL FIELD

The present invention relates to a system to wirelessly connect Local Area Network devices to enable an Internet connection present on one device to be shared with one or more other devices. The system relates in particular, but not exclusively, to sharing a wireless Internet connection of a smart phone or tablet with another such device.

### DESCRIPTION OF RELATED ART

With the widespread of wireless communication devices, such as smart phones or tablets, there is increasing demand for wireless Internet. Often a smart phone is registered to one or more home cellular networks that provide geographical coverage of a home locality. However, if a user of the device travels outside the geographical coverage area of the home cellular network, then the user often connects to a visited cellular network. Agreements exist between the proprietors of home cellular networks and visited cellular networks to ensure that the wireless device can remain connected to a cellular network. However, the cost to connect to and use a visited cellular network, typically referred to as roaming fees, can be particularly high. Accordingly it is desirable that, rather than connect directly to the visited cellular network, the user of the device connects to another such device which has the visited cellular network registered as its home cellular network and thereby uses the other device as a network bridge.

KR 10-1064936 discloses a method for sharing an Internet connection of a wireless local area network (WLAN) device with a smart phone, wherein a wireless connection between the smart phone and device is achieved without a user of the smart phone having to manually enter a wireless access code. More particularly, prior to the smart phone requesting a connection to the WLAN device, a server system is used to assign a specific Service Set Identifier (SSID) to the WLAN device. The server system then executes a connection program to generate a network access code related to the SSID, and sends the access code to the WLAN device. Subsequently, the smart phone downloads, from the server system, the connection program with the network access code and SSID embedded therein. When a connection is requested by the smart phone, the smart phone executes the downloaded connection program and selects the SSID of the WLAN device. The network access code is then extracted by the downloaded connection program and is used to authenticate a connection between the smart phone and WLAN device.

A drawback with such a method is that the proprietor of the WLAN device does not able to identify the user of the smart phone who is sharing their Internet connection. It would be desirable to be able to identify user in the event that the user performs an illegal activity over the Internet, such as a download of unauthorised copyrighted material or other illegal material, and authorities pursue the proprietor of the WLAN device for the activity. The proprietors of such WLAN devices, in the absence of being able to identify such a user, may therefore be unwilling to share their Internet connection.

### SUMMARY OF THE INVENTION

An object of the invention is to provide a system for sharing an Internet connection of a second device with a first device, wherein the proprietor of the second device can securely determine the identity of the proprietor of the first device.

It would be advantageous for the system to be operable to provide the identity of the user of the first device in the event that an illegal Internet activity is performed.

It would be advantageous to provide a secure system to connect the first and second device such that a third party is unable to hijack the connection.

It would be advantageous to provide a system to connect the first and second device which is easy and convenient to use.

It would be advantageous to provide a system which offers incentives for a user to share their Internet connection to promote sharing.

Objects of the invention are achieved by the system according to claim 1 and the method according to claim 14.

Disclosed herein and according to a first aspect of the invention is a system to share an Internet connection of a second device with a first device by means of a wireless network connection between the first device and second device. The first device comprises a connection program, the connection program comprises first device information comprising identification information to identify the first device and an encryption algorithm of an asymmetric cryptographic algorithm. The connection program is configured to transmit the first device information to the second device. The second device comprises a connection program configured to verify the identity of the first device by means of the received first device information and being configured to encrypt a connection access code using the received encryption algorithm. The connection program of the second device being further configured to subsequently transmit connection information comprising the encrypted connection access code to the first device. The connection program of the first device is configured to decrypt the received connection access code using a decryption algorithm of the cryptographic algorithm, and to connect the first device to the second device using the decrypted connection access code. The connection program of the second device is configured to allow Internet access to the connection that uses the decrypted connection access code. The system being operable to generate and store on a memory unit usage information, wherein the usage information comprises the usage of the Internet by the first device over the connection that uses the decrypted connection access code.

Accordingly, the above objectives are met since the second device can securely verify the identity of the first device before enabling sharing of its internet connection. Moreover, the encryption of the connection access code by the cryptographic algorithm of the first device ensures the verified first device is connected over a network to the second device as opposed to a third party. The stored usage information can be used if required to identity of the first device in the event that an illegal internet activity is performed. Moreover, the system is convenient to use since it does not require a user to manually enter a connection access code.

The connection program of the second device may be configured to verify the identity of the first device by means of transmitting at least part of the received first device information to a server system, the server system to return verification information to the second device. The connection program of the second device may alternatively, or in addition, be configured to verify the identity of the first device by means of at least part of the received first device information using a database of the second device.

The connection program of the second device may be configured to transmit second device information to the first device, the second device information for verification of the identity of the second device; and the connection program of the first device may be configured to verify the identity of the first device by means of the received second device information. The connection program of the first device may be configured to verify the identity of the second device by means of transmitting at least part of the received second device information to a server system, the server system to return verification information to the first device. The connection program of the first device may alternatively, or in addition, be configured to verify the identity of the second device by means of at least part of the received second device information using a database of the first device.

The usage information may comprise an encrypted identifier to identity first device, and the cryptographic algorithm of the first device may be configured to generate the encrypted identifier. The connection program of the second device and / or the server system may be configured to verify the encrypted identifier as belonging to the first device by using the first device information or a database. The first device may be configured to generate the usage information, and to transmit the usage information to the second device and / or the server system. Alternatively, the second device and / or server system may generate the usage information and send the generated usage information to the first device for verification. The server system and / or the second device may comprise the memory unit, the server and / or the connection program of the second device may be configured to store the usage information on the memory unit. The usage information may also be stored on a memory unit of the first device.

The cryptographic algorithm may be an asymmetric cryptographic algorithm that comprises a key pair, the key pair comprising a public key and a private key, wherein the encryption algorithm is the public key, the decryption algorithm is the private key. The encrypted identifier of the usage information may comprise a digital signature of the private key of the first device, and the connection program of the second device is configured to verify the digital signature as belonging to the first device by using the received public key of the first device.

The identification information of the first device may comprise a certificate associated with the public key of the first device, wherein the connection program of the second device is configured to verify the identity of the first device by transmitting the public key and certificate to a certification authority, the certification authority to return verification information to the second device. Alternatively, or in addition, the verification may be achieved locally on the second device using a database of the second device. The first device information may alternatively, or in addition, comprise a digital signature made by the private key of the first device which can be verified by the received public key of the first device. The second device information may comprise a public key of the second device, and a certificated associated with the public key of the second device. The usage information may comprise the public key, and / or the certificate of the first device.

The connection program of the second device may be configured to generate, or retrieve from a database, the connection access code, and an SSID of the connection information. The connection program of the first device may be configured to receive a connection command from a user and to subsequently operate the first device as an AP, the AP transmitting a unique SSID, and wherein the connection program of the second device may be configured to: receive a share command from a user and to subsequently operate the first device as client; to receive and identify the unique SSID, and to connect the second device to the AP of the first device using the unique SSID. The connection program of the second device may be configured to terminate the connection subsequent to transmitting connection information comprising a further unique SSID, and may be configured to operate the second device as an AP, the AP transmitting the further unique SSID, and wherein the connection program of the first device may be configured to operate the second device as a client subsequent to receiving the connection information, and may be configured to further connect the first device to the AP of the second device using the further unique SSID.

The connection program of the second device may be configured to allow Internet access to the further connection subsequent to verification that the encrypted identifier belongs to the first device by using the first device information.

The usage information may comprise a predetermined duration of Internet usage, and wherein the connection program of the first and / or second device may be configured to terminate sharing of the Internet after expiry of the predetermine duration.

The first device and / or the second device may comprise a mobile device. The mobile device may comprise one of a group consisting of the following: laptop; PDA; tablet; Smartphone; WLAN portable music player; electronic book; computer game device. The second device may comprise a fixed device. The fixed device may comprise one of a group consisting of the following: router; personal computer; computer workstation; server; mainframe computer.

The connection program of the second device may be configured to obtain status information associated with the first device and to allow the first device to share an Internet connection based on a value of the status information. The connection program of the first device may be configured to obtain status information associated with the second device and to accept sharing of the Internet connection based on a value of the status information. The status information may comprise a trust value, the trust value being determined by a usage history of shared Internet connections associated with the first or second device, wherein the trust value is adjusted by a first amount by each completed Internet sharing operation with a positive outcome, and adjusted by an opposed second amount by each Internet sharing operation with a negative outcome. The status information may alternatively, or additionally, comprise a credit value, the credit value being determined by the amount of credit associated with the first device.

The system may comprise a server system having a user account database, a user account of the user account database being associated a device of the system, the server system may be configured to enable installation and / or operation of the connection program on the device upon creation of the user account. The connection program may be verified for operation by means of validation the identity of the user account or / the device associated with the user account. The user account may linked to an account of the user on another server system, for example, a PayPal "verified account" linked to a credit card account or a bank account.

Disclosed herein and according to a second aspect of the invention is a method of sharing an Internet connection of a second device with a first device by means of a wireless network connection between the first device and second device. The first device comprises a connection program, the connection program comprising first device information comprising identification information to identify the first device and an encryption algorithm of an asymmetric cryptographic algorithm. The method comprises: transmitting the first device information from the first device to the second device; verifying the identity of the first device on the second device using the received first device information by means of a connection program of the second device; encrypting a connection access code on the second device by means of the connection program of the second device and the received encryption algorithm; transmitting from the second device to the first device connection information comprising the encrypted connection access code; decrypting on the first device the received encrypted connection access code using a decryption algorithm of the cryptographic algorithm of the first device; connecting the first device to the second device using the decrypted connection access code; enabling Internet access to the connection that uses the decrypted connection access code; and generating and storing usage information on a memory unit, wherein the usage information comprises the usage of the Internet by the first device over the connection that uses the decrypted access code.

The method according to the second aspect may be combined with the system according to the first aspect in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### BRIEF DESCRIPTION OF THE DRAWINGS

For a better understanding of the invention, and to show how embodiments of the same may be carried into effect, reference will now be made, by way of example, to the accompanying diagrammatic drawings in which:
Figure 1 is a schematic of a process for obtaining a wireless local area network connection between a first and second device according to an embodiment of the invention;
Figure 2 is a block diagram of an abstraction of the devices of figure 1;
Figure 3 is a flow diagram of various embodiment processes for creating a user account using the devices of figure 1;
Figure 4 is a flow diagram of an embodiment process for obtaining a certificate on the devices of figure 1;
Figure 5 is a flow diagram of the embodiment process of figure 1.

### DETAILED DESCRIPTION OF EXEMPLARY EMBODIMENTS

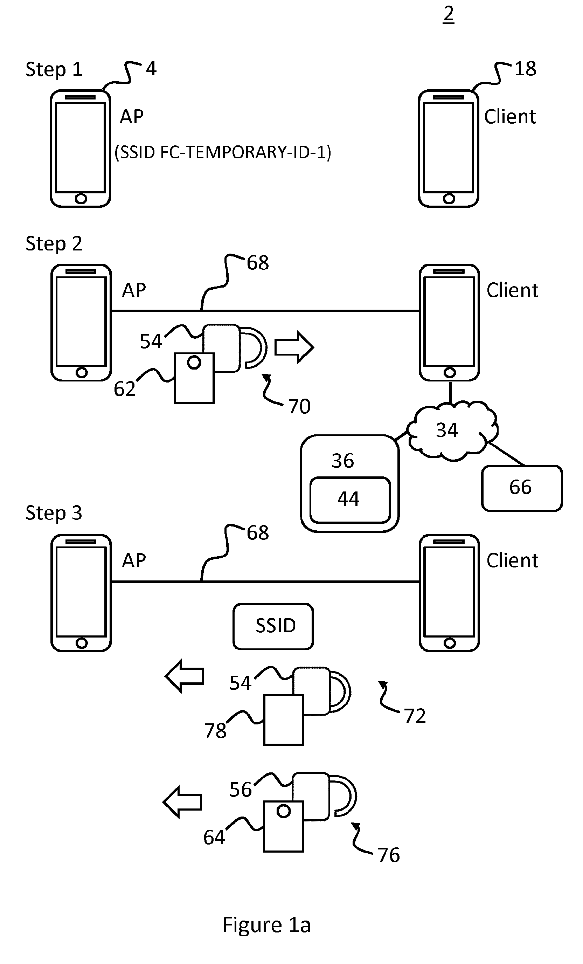

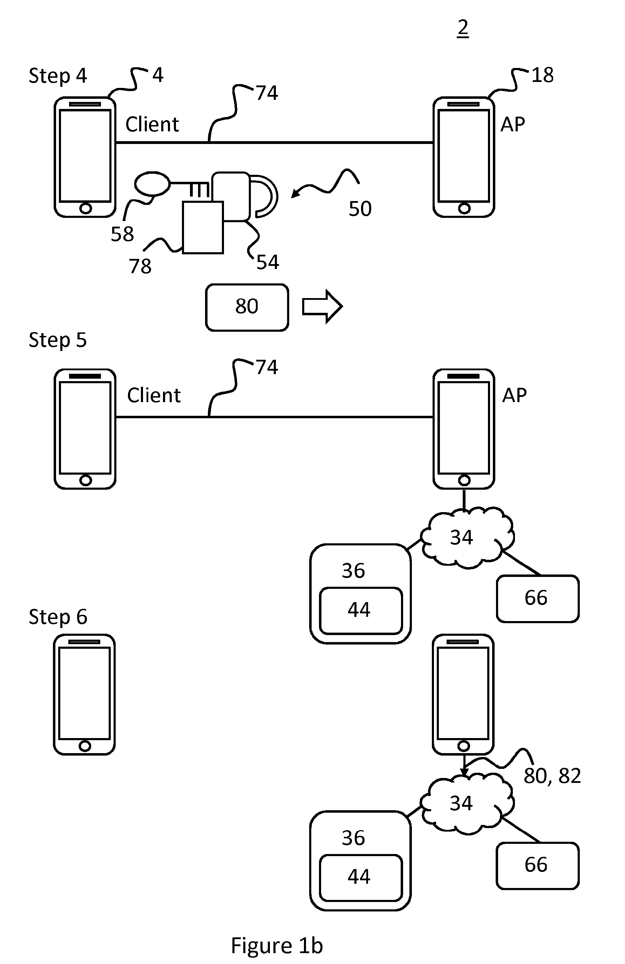

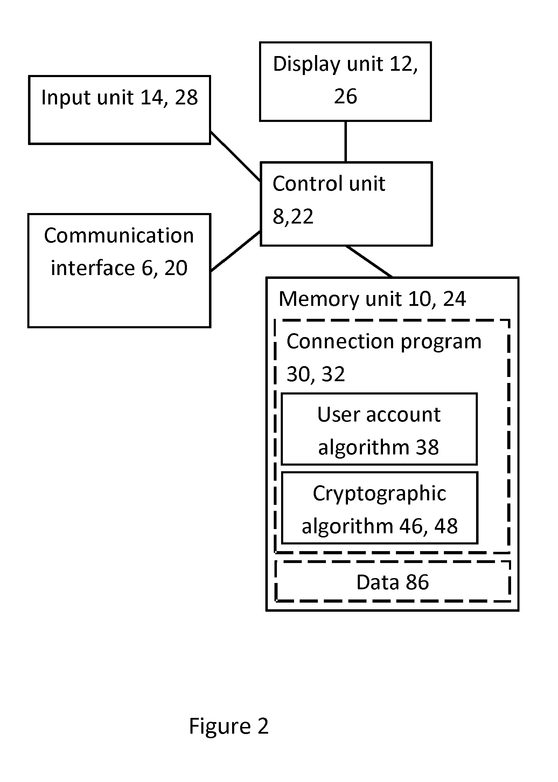

Figures 1 and 2 show a system 2 to wirelessly share an Internet connection of one of a first or second device with the other of the first or second device. In this particular example an Internet connection of the second device is shared over a wireless local area network (WLAN) with the first device. It will be appreciated that in another example an Internet connection of the first device can be shared with the second device and that the Internet connection can be shared by other wireless means as discussed in more detail following.

The first device 4 is a mobile device operable for WLAN communication. In the examples discussed herein the first device is a smart phone; however the first device may alternatively be one of a group consisting of the following: laptop; PDA; tablet; other mobile device.

With reference to figure 2, the first device 4 may be idealised as comprising: a communication interface 6 for WLAN communication; a control unit 8; a memory unit 10; a display unit 12; and a user input unit 14, such as selection keys or a touch screen. The memory unit 10 comprises stored data 86 and stored programs, the instructions of which are processed by the control unit 12. The control unit 8 also controls the communication interface 6 to obtain a WLAN connection with other devices. The user interfaces with the programs via the display unit 12 and input unit 14.

Figure 2 further shows the second device 18, which in this example is a smart phone as per the first device 4. The second device may encompass other mobile devices as discussed in the above or a fixed device operable for WLAN communication, for example it may comprise one of a list consisting of the following: router; desktop PC; workstation; server; other suitable fixed device. Accordingly in this example the second device 18 also comprises: a communication interface 20; a control unit 22; a memory unit 24; a display unit 26; and a user input unit 28.

The first device 4 and second device 18 are operable to verify the identity of each other during a connection process as will be discussed in more detail in the following. Such an operation is achieved in part by a connection program 30, 32 (that may be referred to as an app.) installed on the respective first and second devices 4, 18. The connection program 30, 32 comprises various sub-algorithms which will also be described in more detail in the following.

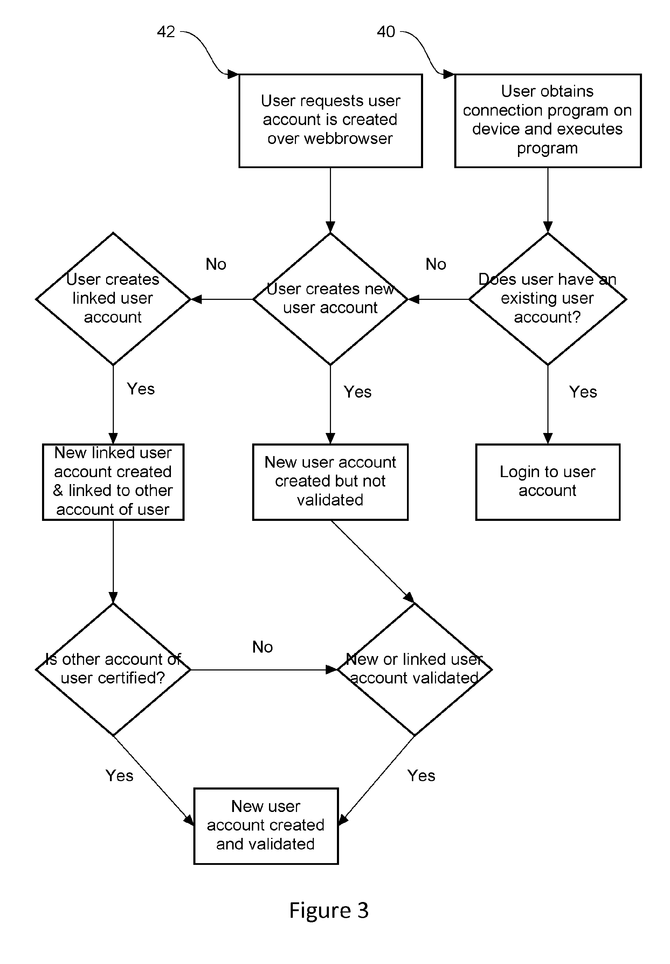

In an example the connection program 30 may be installed on the memory unit 10 of the first device 4 as part of or as a result of a successful user account creation process. Accordingly, various exemplary processes for user account creation will now be discussed as are illustrated in figure 3, wherein a user initially connects the first device 4 via a LAN, or other suitable connection, over the Internet 34 to a server system 36.

To create a user account according to a first embodiment user account creation process 40, the user initially downloads the connection program 30 on to the first device. The connection program 30 may be downloaded via the Internet 34 from the server system 36 or other source. The connection program 30 may then be installed and executed to initiate the user account creation process. The connection program 30 comprises a user account algorithm 38 for creation of a user account and / or login to an existing user account. The user account algorithm 38 when executed prompts the user to input identification information to create the user account or to login to an existing user account. In an example the identification information may comprise one of more of a: user id; phone number; password; user email address; other identification information. If the user has an existing user account, then the identification information may be used by the user account algorithm 38 of the first device 4 and optionally a user account algorithm 44 of the server system 36 to authenticate and to login to the existing user account. Else, a new and / or linked user account is created using the identification information as will now be discussed.

If the user selects to create a new user account then the account creation process may comprise a step of user account validation, wherein the authenticity of the device and / or user is validated. In an embodiment user account validation step, initially a user account validation request is sent by the user account algorithm 38 of the first device 4 to the server system 36. Thereafter, the server system 36 sends account validation information to the first device 4. The account validation information is subsequently processed and returned to the server system 36. In an advantageous embodiment, the account validation information is sent at least partially over a cellular network such as the GSM network, for example it is sent as an SMS. It may alternatively be sent via another communication network, such as a WLAN. The account validation information may comprise an activation code generated by the user account algorithm 44 of the server system 36, which is sent to the first device and returned to the server system 36 to validate the user account. Validation may be immediate, or occur over a predetermined period of time, for example 20 days, such that instances of phone number identity certification may be accounted for.

If the user selects to create a linked user account, then the user account that is created is linked with another user account. This may comprise using part or all of the identification information of the user from the other user account. For example, the other user account may be a social network server such as Linkedln, Facebook, or other such online social network. In a preferred example, the other user account has a high level of security such as a PayPal "verified account" linked to a credit card account or bank account. Subsequently, the linked user account creation process may comprise a step of user account validation, wherein the user account algorithm 44 of the server system 36 performs a step of determining whether the other user account is one certified. Certification may require that the level of security required to obtain the other user account is above a predetermined amount, for example, a Paypal "verified account". If the security level is above the predetermined amount then the linked user account can be validated. Else, if the security level is below the predetermined amount, then the linked user account may be validated in accordance with the aforementioned user account validation step for the new user account.

To create a user account according to a second embodiment account creation process 42, the user requests a user account is created over a web browser, which may be displayed on the display unit 12 of the first device 4. The web browser is used to interface with the user account algorithm 44 of the server system 36. The user may be prompted to input into the web browser the above-mentioned identification information to create the user account. The user may choose to create a new user account or a linked user account in accordance with the first embodiment user account creation process. The user account may also be validated in accordance with the first embodiment user account creation process.

The second embodiment user account creation process does not require that the connection program 30 is initially downloaded onto the first device 4. It will be appreciated that the connection program 30 may be downloaded at any step in the process, for example, the connection program 30 may be enabled for download by the server system 36 upon successful user account creation and / or validation. Moreover, the connection program 30 may be sent to the first device 4 as part of the validation information. Alternatively, the connection program 30 may be supplied to the user on a portable memory device.

In a further embodiment user account creation process, the user account may be validated using a smart card system, or other authentication hardware, such as a dongle. In a yet further embodiment user account creation process the connection program 30 may come pre-installed on the first device 4 and the user account may already be created and optionally validated.

It will be appreciated that a user account may be created and optionally validated on the second device 18 in accordance with one of aforementioned example embodiments. Moreover, it will be appreciated that the corresponding connection program 32 is installed on the second device 18 in accordance with one of the aforementioned example embodiments.

The connection program 30, 32 further comprises a cryptographic algorithm 46, 48. It will be appreciated that the term connection program is defined broadly herein to encompass any program or data on the device 4, 18 associated with the system 2. The cryptographic algorithm 46, 48 may be obtained on the device 4, 18 and stored on the memory unit 10, 24 by various means. For example it may be generated by the connection program or downloaded from the server system 36 as part of the connection program. Alternatively, it may be supplied to a user using a portable memory unit, such as a flash memory drive, for subsequent upload on the device.

The cryptographic algorithm 46, 48 can be used to encrypt information transmitted from one of the devices and to decrypt the information received by the other of the devices. Various suitable cryptographic algorithms may be used, for example, those which are asymmetric or symmetric, wherein an asymmetric algorithm comprises different encryption and decryption algorithms and a symmetric algorithm uses the same algorithm for encryption and decryption. It will also be appreciated in alternative program architecture the cryptographic algorithm 46, 48 is separate to the connection program 30, 32.

A first embodiment of the cryptographic algorithm 46, 48 comprises an asymmetric type algorithm. More particularly it comprises a key pair type algorithm, wherein the key pair 50, 52 comprises a public key 54, 56 and a private key 58, 60. The key pair may be identified by an RSA cryptosystem. For example, in an exemplary embodiment the key pair is RSA-2048.

The public key 54, 56 may be used to encrypt information or to verify a digital signature, whereas the private key 58, 60 may be used to decrypt the information or create the digital signature. In more detail, the public key 54 of the first device 4 may, for example, be sent by the first device to the second device 18 so that it can be used by the second device to encrypt information on the second device. The encrypted information may then be transmitted by the second device to the first device, which can in turn be decrypted using the private key 58 of the first device. In a like manner, the public key 56 of the second device 18 may, for example, be sent by the second device to the first device 4 so that it can be used by the first device to encrypt information on the first device. The encrypted information may then be transmitted by the first device to the second device, which can in turn be decrypted with the private key 60 of the second device.

The key pairs 50, 52 of the first and second devices 4, 18 may have respective certificates 62, 64 associated therewith. The certificate 62 may be used to certify that the public key 54 belongs to the first device 4 (or a user account associated with first device). In a like manner, the certificate 64 may be used to certify that the public key 56 belongs to the second device 18 (or a user account associated with second device). Moreover, the certificate may be transmitted with information comprising a digital signature of the private key of the transmitting device.

Certification can be achieved by Public Key Infrastructure (PKI), wherein a the public key 54, 56 and relevant certificate 62, 64 are sent over the Internet 34 to a server system of a third party known as a Certification Authority (CA) 66 that certifies ownership. Such functionality may be achieved by means of a user account unique identifier which corresponds to the user account. In an example the unique identifier is the public key or a hash of the public key, for example, the hash may be SHA-256.

The certificate may comprise one or more of a list consisting of the following: Serial Number (to uniquely identify the certificate); Subject (the person, or entity identified, for example by the account unique identifier); Signature Algorithm (the algorithm used to create a signature); Signature (a signature to verify that the certificate came from the issuer); Issuer (the entity that verified the information and issued the certificate). Valid-From (the date the certificate is first valid from); Valid-To (the expiration date); Key-Usage (the purpose of the public key, for instance, encipherment, signature, certificate signing); Public Key (the public key; Thumbprint Algorithm (the algorithm used to hash the public key certificate); Thumbprint (the hash itself, used as an abbreviated form of the public key certificate); a trust level or value, which is discussed in more detail following.

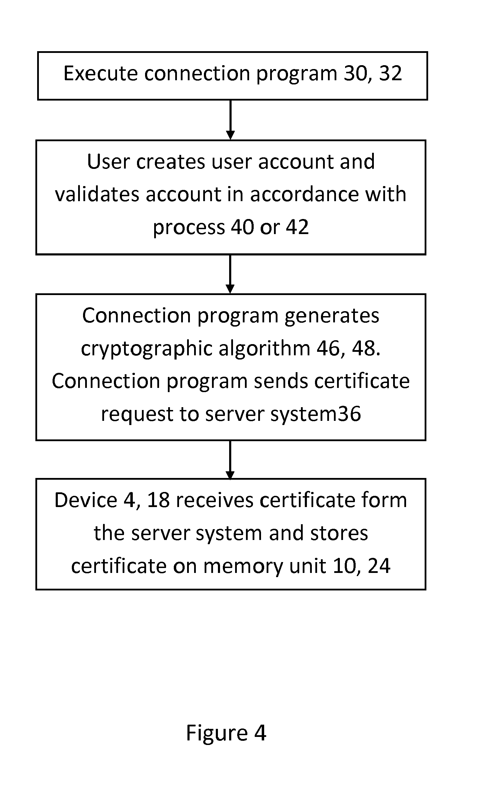

An exemplary process for obtaining the certificate 62, 64 on a device 4, 18 is shown in figure 4, wherein a user may firstly create a user account in accordance with one of the aforementioned user account creation processes and obtain the connection program 30, 32 on the device 4, 18. The connection program may be used to generate the cryptographic algorithm 46, 48 and therefore in the example the public key 54, 56. To obtain the certificate 62, 64, the connection program 30, 32 sends a certificate request comprising the public key 54, 56 to the server system 36 or other associated device. Thereafter, the server system 36 or other associated device generates and transmits the certificate 62, 64 to the device 4, 18 where it can be stored on the memory unit 10, 24. The certificate request may comprise a step of digitally signing the request using the private key 58, 60 of the device. The server system 36 may then use the received public key 62, 64 to verify the digital signature.

In a preferred example, the device 4, 18 obtains and stores the public key and associated certificates of other like devices that are operable on the system 2. The device 4, 18 may also obtain and store a public key and certificate of the server system 36. In this way a device can verify the identity of other devices without an Internet connection. For example, the first device 4, in addition to having its own public key 54, private key 58 and certificate 62, obtains and stores the certificate 64 and public key 56 of the second device 18. In a like manner the second device 18, may obtain and store the certificate 62 and public key 54 of the first device 4. More particularly, the public key and associated certificates of other devices operable on the system 2 may be stored on a device as a database 86.

The database 86 may be part of the connection program 30, 32 or associated with the connection program. Accordingly, the database 86 is either obtained with the connection program 30, 32 from the server system 36 in the manner previously described, or is obtained in a separate operation. It is preferable that the database can only be obtained on the device following the successful creation of a user account, or more particularly a validated user account.

A second embodiment of the cryptographic algorithm 46, 48 comprises a symmetric type algorithm, for example, it may comprise an algorithm such as that used in Blowfish, Serpent, Rijndael or other such symmetric algorithm. In this particular embodiment the same secret key is used to encrypt or decrypt information. Alternatively there may be two keys linked by a transform for decryption / encryption. The secret key may be obtained on the device 4, 18 and stored on the memory unit 10, 24 by various means. For example, it may be generated by the connection program 30, 32. It may alternatively be downloaded from the server system 36 or other associated device which may include a step of authentication via a smart card. Alternatively, the secret key may be supplied to a user using a portable memory unit, such as a flash memory drive, for subsequent upload on the device.

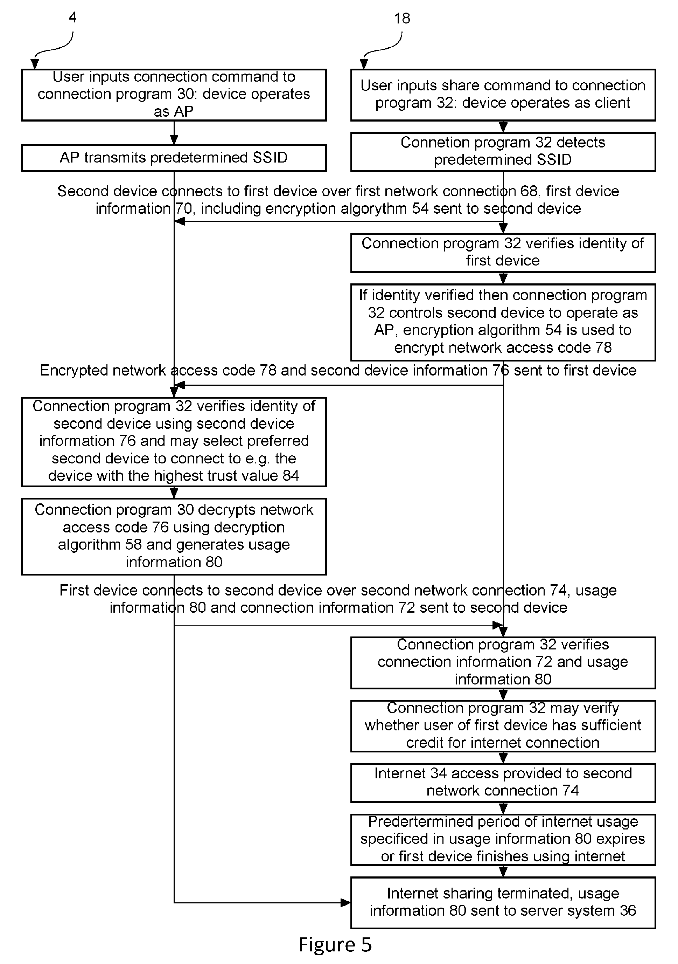

With reference to figures 1 and 5 an exemplary process to obtain a LAN connection between the first 4 and second device 18 and to subsequently a shared Internet connection will now be described, wherein the cryptographic algorithm 46, 48 of the devices comprises an asymmetric type having a key pair according to the first embodiment cryptographic algorithm.

Step 1: the connection program 30 of the first device 4 receives a connection command from a user of the first device and subsequently operates the first device as an Access Point (AP). Meanwhile, the connection program 32 of the second device 18 receives a share command from a user of the second device and subsequently operates the second device in a client mode and searches for a suitable AP.

During this Step, the connection program 30 of the first device 4 may be configured so that the AP transmits a predetermined Service Set Identifier (SSID), whereas the connection program 32 of the second device 18 may be configured to identify the predetermined SSID. The SSID may comprise a predetermined character string, such as SSID FC-TEMPORARY-ID-1. The SSID may be stored in the database 86 of the connection program 30, 32 or generated by the connection program.

Step 2: the connection program 32 of the second device 18 detects the AP and connects the second device 18 to the AP of the first device 4 via a first network connection 68. The connection program 32 of the second device subsequently verifies the identity of the first device. This is achieved by the transmission of first device information 70 from the first device 4 to the second device 18 via the first network connection 68, wherein the first device information is used by the second device to verify the identity of the first device. The first device information 70 comprises an encryption algorithm which in the preferred example is the public key 54. The first device information 70 may further comprise identification information to identify the first device (or an account associated with the first device). In the preferred example, the identification information comprises the certificate 62. However, the identification information may alternatively comprise data embedded in the public key 54, for example a unique identifier.

Verification may be achieved locally on the second device, for example using the database of the device that comprises public keys and certificates. Alternatively or in addition it may be achieved using a remote service, such as a certification authority 66 and / or by the server system 36, wherein the remote service returns verification information to the device. Verification may be performed by one or more of the following checks: using the database of public keys and certificates (stored on the second device or server system 36) to confirm that the certificate 62 is associated with the public key 54; by verifying that the certificate 62 is valid, for example, by checking the valid-from date and / or the valid-to date with the current date and / or by checking the certificate has not been revoked; by verify that the certificate has a valid digital signature from the server system 36, for example, a digital signature made by the private key of the server system 36 which is verified by using a stored public key of the server system 36.

The connection program 32 may be configured to terminate the connection process in the event the identity of the first device is not successfully verified by the second device.

Step 3: if the identity of the first device 4 is verified by the second device 18, then the connection program 32 of the second device 18 instructs the second device to transmit connection information 72 to the first device. The connection information 72 comprises information to enable the first device to connect as a client to an AP of the second device via a second network connection 74. In the example, the connection information 72 comprises a network access code 78 (a password) which is encrypted by the received encryption algorithm of the first device, which in the example is the public key 54. It may also comprise a SSID. The SSID may comprise a predetermined character string, such as SSID FC-TEMPORARY-ID-2. The SSID may be stored in the database 86 of the connection program 32 or generated by the connection program.

Subsequent to transmission of the connection information 72, the connection program 32 of the second device 18 may terminate the first network connection 68 and operate the second device as an AP. The AP may transmit the predetermined SSID. The connection information 72 may alternatively or additionally be transmitted by the AP.

The connection program 30 of the first device 4 may verify the identity of the second device 18 in the manner as discussed above: the second device 18 transmits second device information 76 to the first device 4, wherein the second device information 76 is used by the first device 4 to verify the identity of the second device 18. The second device information 76 may comprises an encryption algorithm, which in the preferred example is the public key 56. The second device information 76 may further comprise identification information to identify the second device (or an account associated with the second device). In the preferred example, the identification information comprises the certificate 64. The connection program 30 of the first device 4 subsequently verifies the identity of the second device 18 by performing one or more of the aforementioned checks. However, since at this step in the process the first device may not have an Internet 34 connection, verification is performed locally on the first device using the database 86. For example, verification is performed by verifying that the certificate 64 has a valid digital signature from the server system 36 using the public key of the server system or that the certificate 64 is associated with the public key 56. Subsequently, if an Internet 34 connection is made available to the first device 4, further verification of the identity of the second device may be provided remotely using a remote service such as the certification authority 66 and / or the server system 36 in the manner discussed above. It will be appreciated that the identity of the second device may be verified by transmission of the second device information 76 over the first or second network connection 68, 74. The connection program 30 may be configured to terminate the connection process in the event the identity of the second device is not successfully verified by the first device.

Step 4: the connection program 30 of the first device 4 decrypts the network access code 78 using the decryption algorithm of the cryptographic algorithm 34. In the example the decryption algorithm is the private key 58. The connection program 30 subsequently connects the first device 4 to the second device 18 over the second network connection 74 using the network access code 78 and optionally the other connection information 72.

The connection program 30 of the first device 4 may generate usage information 80, wherein the usage information comprises details of the usage or the intended usage of the Internet by the first device over the second network connection 74. The usage information 80 may be sent to the second device and / or the server system 36, or other associated device, for storage on a memory unit. The usage information 80 may comprise one or more of a list consisting of the following: a statement that the user of the first device agrees to be responsible for its Internet usage the via the Internet connection of the second device; a predetermined duration of usage, for example 2, 5 or 10 minutes; a usage start time and date; the public key 54 of the first device; the certificate 62 of the first device; the public key 56 of the second device; the certificate 64 of the second device; an amount of credit to pay for the provision of the Internet. The usage information 80 may also comprise an encrypted identifier to identify the first device 4, wherein the encrypted identifier is generated by the cryptographic algorithm 46 of the first device. In an advantageous example the encrypted identifier comprises a digital signature made by the private key 58 of the first device.

It will be appreciated that the usage information may at least partially be generated by the second device 18 and / or the first device 4 and / or the server system 36. For example, the server system generates the usage information and sends it to the first and second device for approval by digital signature.

Step 5: the connection program 32 of the second device 18 performs a step of verifying the connection information 72 used to connect to the second network connection 74, and if verified then Internet access to the first device via the second network connection 74 is enabled. For example, if the network access code 78 and / or SSID are verified as correct, then the second device allows Internet access to the first device. The connection program 32 may also verify the encrypted identifier of the usage information 80 as belong to the first device by using the first device information 70. In the example, the received public key 54 of the first device 4 is used by the second device 18 to verify a digital signature of the private key 58 of the first device 4. Internet 34 access may only be allowed on successful verification of the encrypted identifier. In an alternative example, the usage information 80 may be sent to the server system 36, or other associated device, and verified thereon, wherein the details of the verification are sent thereafter to the second device.

Step 6: upon disconnection of the first device 4 from the second network connection 76, or the second device receiving a command that Internet use has ended, or otherwise, the connection program 32 of the second device 18 terminates its AP. At this step the usage information 80 may be stored on the second device and / or the first device and / or sent to the server system 36 for storage. It will be appreciated that the usage information 80 may alternatively be stored upon commencement of the second network connection 74, usage of the Internet connection by the first device, or other suitable step. The connection program 32 of the second device 18 may be configured to detect the expiry of a predetermined duration of usage defined in the usage information 80. If no further usage information has been received then the connection program 32 may terminate its AP. Else, if further usage information has been received, for example, to extend or renew the predetermined duration of usage, then the new usage information may be verified as above and the AP maintained.

It will be appreciated that various alternatives may be derived from the above steps depending on the cryptographic algorithm used. It will also be appreciated that in the above example steps the private key 60 of the second device 18 is not used. However, in the event that the second device shares an Internet connection of the first device, or in an alternate example connection process, the private key 60 may be used.

The connection processes may comprise various further optional steps, which are discussed following:
Referring to figure 5 and figure 1, at step 2 (during verification of the identity of the first device 4 by the second device) the connection program 32 of the second device may be configured to obtain status information 82 from the server system 36 and / or the first device 4. The status information 82 being related to a status of the first device 4, or the user account associated with the first device. The connection program 32 may then share the Internet connection with the first device 4 based on a status value of, or computed from, the status information 82.

In more detail, the connection program 32 of the second device may perform a step of transmitting a user account status request to the server system 36 or other associated device. The server system 36 may then return the status information 82. Alternatively, or in addition, the user account status request may be sent to the first device 4. The first device 4 may then return the status information 82. For example, the above-mentioned first device information 70 sent from the first device to the second device also comprise the status information 82, such as the certificate 62 in particular. The status information of the received certificate 62 of the first device may then be verified locally and / or be transmitted to the server system 36 as part of the status request. The server system 36 may then identify the user account based on the certificate 62 and subsequently return the status information based on the status of the user account.

The status information 82 may comprise one or more state identifiers each of which may have its own status value. The state identifiers may comprise one or more of a list consisting of: user account status; user account credit value; user account trust value 84; other relevant information relating to the user account.

If the status value of a particular state identifier (or an overall status value calculated from the status values, for example, an aggregate status value) is determined by the connection program 32 of the second device 18, or the server system 36, to be unsatisfactory, then the connection process can be blocked. However, if the status value of a particular state identifier (or an overall status value calculated from the status values) is determined to be satisfactory then the connection process may continue. A satisfactory status value may be determined if its value is above a predetermined amount, for example zero.

In an example the status value may be identifiable as dormant, valid or revoked. A dormant status value may be set if the user account credit value state identifier it set to a status indicative of there not being sufficient credit to permit Internet sharing. A valid status value may be set if the user account credit value state identifier it set to a status indicative of there being sufficient credit to permit Internet sharing. A revoked status value may be set if the trust value state identifier 84 is set to a status indicative of the user performing an illegal activity, for example, the downloading of copy righted material or other illegal material.

In a similar fashion at step 3 (during verification of the identity of the second device 18 by the first device) the connection program 30 of the first device 4 may be configured to obtain and verify status information 82 of the second device 18. The status information of the second device 18 may be obtained from the server system 36 via the second device and / or obtained from the second device 18 (for example from the certificate 64) and optionally verified by the server system. The connection program 30 may then accept sharing of the Internet connection based on the status value of the status information. In the preferred example, the connection program 30 may verify whether the trust value 84 determined from the certificate 64 of the second device 18 is above a predetermined threshold value.

At step 3 the connection program 32 of the second device 18 may send to the first device 4 account information obtained from the user account credit value state identifier. For example, in the event of satisfactory credit value status identifier, the user account information may comprise a message containing details of the amount of credit of the user account and the amount of credit that will be debited from the user account upon connection to the Internet. Alternatively, in the event of an unsatisfactory credit value identifier the account information may comprise a message containing details of the additional credit required for connection process. The message may also comprise the trust value 84 which is discussed in more detail following.

In an example the trust value 84 associated with the first and / or second device is increased during a successful connection and Internet sharing process. In this way the sharing of a connection is encouraged. In the event that the account has been used for illegal activity the trust value can be decreased, and in particular it may be decreased to a value wherein it is not possible to obtain a further shared Internet connection. A low trust value may then be increased by the associated user increasing the credit on their account or otherwise paying a fine.

As discussed in the above, since the status information 82 can be verified by the server system 36, or by other means, the trust value 84 is resistant to attack. In this way a user can be confident of the behaviour of a user they connect to.

In a further example trust value 84 is comprised of sub values. For example [p, u, n], wherein; p represents positive outcomes, such as the number of successful uses of a shared Internet connection; u represents unknown outcomes, such as the user is presently using a shared Internet connection; and n represents negative outcomes, such as illegal activity or the shared Internet connection was too slow or the shared Internet connection was terminated whilst in use. In an example the sub value p may be increased by purchasing points. It may also be increased at a rate of a predefined number of points for a predefined duration of a successfully shared Internet connection. For example, one point is earned per hour. In an example the sub value n may be increased by a predetermined amount, such as 100, upon illegal activity. The sum of p-u-n may be used to determine the trust value 84, and if above a predetermined amount, such as zero, then a shared Internet connection may be allowed.

It will be appreciated that during use of the system 2 the status information 82 is continuously updated by the server system 36. For example, when the server system 36 receives the usage information 80 the status information is updated accordingly. In an example: the user account credit value state identifier has the credit of the Internet usage debited therefrom; if the user is reported by an authority to have performed an illegal activity then trust value state identifier is updated; if a user makes a payment to the system the user account credit value state identifier may be credited by the relevant amount. Moreover, the local databases 86 of the devices 4, 18 are preferably regularly updated by the server system 36. For example, if a WLAN connection is made between the device 4, 18 and the server system 36 then the date of the last update of the database is checked and if necessary a further update is downloaded.

At stage 2 the connection program 32 of the second device 18 may be configured to wait for potential replies from a group of other devices and perform a step of selecting a device to share its Internet connection. The status information 82 of the other devices may be compared to select the most appropriate device, for example, the device with the highest trust value 84. In a similar fashion, at stage 4 the connection program 30 of the first device 4 may be configured to wait for potential replies from a group of other devices and perform a step of selecting a device to accept sharing of the Internet connection from. The status information 82 of the other devices may be compared to select the most appropriate device, for example, the device with the highest trust value 84.

It will be appreciated that in the above reference has been made to obtaining a connection between a first and second device, wherein the second device shares its Internet connection with the first device. However, in another instance the connection can be between a first and second device, wherein the first device shares its Internet connection with the second device. Moreover, in an advantageous example, a device shares an Internet connection it has with one of a plurality of suitable devices. In a similar fashion, one of a plurality of devices shares an Internet connection it has with a suitable device. A device may share its Internet connection with a plurality of suitable devices at the same time, for example, by using the same network access code, and logging the usage information of each device connected thereto. It will also be appreciated that in the above information may be transmitted in part over a DSL line, a WLAN or over a GSM 3G, 4G or other suitable cellular network.

In the case of a first device able to sign all its Web requests to the second device AP, such as a Window 8 laptop but not an Android smartphone so far, the second device is then able to share its Internet connection with several devices at the same time with the same wireless network password, whilst logging usage information per device based on which device has signed which Web request.

### List of references

### 2 System

4 First device
   6 Communication interface
   8 Control unit
   10 Memory unit
      30 Connection program
         38 User account algorithm
            40 First embodiment account creation process
            42 Second embodiment account creation process
         46 Cryptographic algorithm
            50 Key pair
               54 Public key (72 first device information)
               58 Private key
            62 Certificate (72 first device information)
      86 Database
   12 Display unit
   14 Input unit
18 Second device
   20 Communication interface
   22 Control unit
   24 Memory unit
      32 Connection program
         48 Cryptographic algorithm
            52 Key pair
               56 Public key (76 second device information)
               60 Private key
            64 Certificate (76 second device information)
   26 Display unit
   28 Input unit
34 Internet
36 Server system
   44 User account algorithm
66 Certification authority
68 First network connection
72 Connection information
   78 Network access code
74 Second network connection
80 Usage information
82 Status information
   84 Trust value

## Claims

1. A system to share an Internet connection of a second device with a first device by means of a wireless network connection between the first device and second device, the first device comprising a connection program, the connection program comprising first device information comprising identification information to identify the first device and an encryption algorithm of an asymmetric cryptographic algorithm; the connection program configured to transmit the first device information to the second device; the second device comprising a connection program configured to verify the identity of the first device by means of the received first device information and being configured to encrypt a connection access code using the received encryption algorithm, the connection program of the second device being further configured to subsequently transmit connection information comprising the encrypted connection access code to the first device; the connection program of the first device configured to decrypt the received connection access code using a decryption algorithm of the asymmetric cryptographic algorithm, and to connect the first device to the second device using the decrypted connection access code; the connection program of the second device configured to allow Internet access to the connection that uses the decrypted connection access code; the system being operable to generate and store on a memory unit usage information, wherein the usage information comprises the usage of the Internet by the first device over the connection that uses the decrypted connection access code.

2. The system according to the preceding claim, wherein the connection program of the second device is configured to verify the identity of the first device by means of transmitting at least part of the received first device information to a server system, the server system to return verification information to the second device.

3. The system according to any preceding claim, where the connection program of the second device is configured to transmit second device information to the first device, the second device information for verification of the identity of the second device; the connection program of the first device being configured to verify the identity of the first device by means of the received second device information.

4. The system according to either of the preceding claims, wherein the connection program of the first device is configured to verify the identity of the second device by means of at least part of the received second device information using a database of the first device.

5. The system according to any preceding claim, wherein the usage information comprises an encrypted identifier to identity first device, and the cryptographic algorithm of the first device is configured to generate the encrypted identifier.

6. The system according to the preceding claim, wherein the connection program of the second device and / or the server system is configured to verify the encrypted identifier as belonging to the first device by using the received first device information or a database.

7. The system according to any preceding claim, wherein a server system and / or the second device comprises the memory unit, the server and / or the connection program of the second device being configured to store the usage information on the memory unit.

8. The system according to any preceding claim, wherein the asymmetric cryptographic algorithm comprises a key pair, the key pair comprising a public key and a private key, wherein the encryption algorithm is the public key, the decryption algorithm is the private key.

9. The system according to the preceding claim, wherein the encrypted identifier of the usage information comprises a digital signature of the private key of the first device, and the connection program of the second device is configured to verify the digital signature as belonging to the first device by using the received public key of the first device.

10. The system according to anyone of the two preceding claims, wherein the identification information of the first device comprises a certificate associated with the public key of the first device, wherein the connection program of the second device is configured to verify the identity of the first device by transmitting the public key and certificate to a certification authority, the certification authority to return verification information to the second device.

11. The system according to any one of the three preceding claims, wherein the second device information comprises a public key of the second device, and a certificated associated with the public key of the second device.

12. The system according to any preceding claim when dependent on claim 6, wherein the connection program of the second device is configured to allow Internet access to the further connection subsequent to verification that the encrypted identifier belongs to the first device by using the first device information.

13. The system according to any preceding claim, wherein the first device and / or the second device comprises a mobile device.

14. A method of sharing an Internet connection of a second device with a first device by means of a wireless network connection between the first device and second device, the first device comprising a connection program, the connection program comprising first device information comprising identification information to identify the first device and an encryption algorithm of an asymmetric cryptographic algorithm, the method comprising:
- transmitting the first device information from the first device to the second device;
- verifying the identity of the first device on the second device using the received first device information by means of a connection program of the second device;
- encrypting a connection access code on the second device by means of the connection program of the second device and the received encryption algorithm;
- transmitting from the second device to the first device connection information comprising the encrypted connection access code;
- decrypting on the first device the received encrypted connection access code using a decryption algorithm of the cryptographic algorithm of the first device;
- connecting the first device to the second device using the decrypted connection access code;
- enabling Internet access to the connection that uses the decrypted connection access code;
- generating and storing usage information on a memory unit, wherein the usage information comprises the usage of the Internet by the first device over the connection that uses the decrypted access code.

15. The method according to claim 31, wherein the method comprises a step of operating the system as claimed in any one of claims 1 to 13.

16. The system according to any one of claims 10-13, wherein the usage information further comprises the public key, and / or the certificate of the first device.

17. The system according to any preceding claim, wherein the connection program of the second device is configured to verify the identity of the first device by means of at least part of the received first device information using a database of the second device.

18. The system according to claim 3, wherein the connection program of the first device is configured to verify the identity of the second device by means of transmitting at least part of the received second device information to a server system, the server system to return verification information to the first device.

19. The system according to any preceding claim wherein the first device is configured to generate the usage information, and to transmit the usage information to the second device and / or the server system.

20. The system according to any preceding claim, wherein the connection program of the second device is configured to generate, or retrieve from a database, the connection access code, and an SSID of the connection information.

21. The system according to any preceding claim, wherein the connection program of the first device is configured to receive a connection command from a user and to subsequently operate the first device as an AP, the AP transmitting a unique SSID, and wherein the connection program of the second device is configured to: receive a share command from a user and to subsequently operate the first device as client; to receive and identify the unique SSID, and to connect the second device to the AP of the first device using the unique SSID.

22. The system according to the preceding claim, wherein the connection program of the second device is configured to terminate the connection subsequent to transmitting connection information comprising a further unique SSID, and to operate the second device as an AP, the AP transmitting the further unique SSID, and wherein the connection program of the first device is configured to operate the second device as a client subsequent to receiving the connection information, and to further connect the first device to the AP of the second device using the further unique SSID.

23. The system according to any preceding claim, wherein the usage information comprises a predetermined duration of Internet usage, and wherein the connection program of the first and / or second device is configured to terminate sharing of the Internet after expiry of the predetermine duration.

24. The system according the preceding claim, wherein the mobile device comprises one of a group consisting of the following: laptop; PDA; tablet; Smartphone; WLAN portable music player; electronic book; computer game device.

25. The system to any preceding claim, wherein the second device comprises a fixed device.

26. The system according to the preceding claim, wherein the fixed device comprises one of a group consisting of the following: router; personal computer; computer workstation; server; mainframe computer.

27. The system according to any preceding claim, wherein the connection program of the second device is configured to obtain status information associated with the first device and to allow the first device to share an Internet connection based on a value of the status information.

28. The system according to any preceding claim, wherein the connection program of the first device is configured to obtain status information associated with the second device and to accept sharing of the Internet connection based on a value of the status information.

29. The system according one of the two preceding claims, wherein the status information comprises a trust value, the trust value being determined by a usage history of shared Internet connections associated with the first or second device, wherein the trust value is adjusted by a first amount by each completed Internet sharing operation with a positive outcome, and adjusted by an opposed second amount by each Internet sharing operation with a negative outcome.

30. The system according to one of the three preceding claims, wherein the status information comprises a credit value, the credit value being determined by the amount of credit associated with the first device.

31. The system according to any preceding claim, wherein a server system comprises a user account database, a user account of the user account database being associated a device of the system, the server system being configured to enable installation and / or operation of the connection program on the device upon creation of the user account.

32. The system according to the preceding claim, wherein the user account is linked to an account of the user on another server system.
